(19) Europäisches Patentamt
European Patent Office
Office européen des brevets

(11) EP 0 539 332 B1

# (12) EUROPEAN PATENT SPECIFICATION

(45) Date of publication and mention of the grant of the patent:
**12.03.1997 Bulletin 1997/11**

(51) Int. Cl.[6]: **A01N 43/653**

(21) Application number: **92810799.4**

(22) Date of filing: **20.10.1992**

(54) **Fungicidal compositions**
Fungizide Zusammensetzungen
Compositions fongicides

(84) Designated Contracting States:
**DE FR GB NL**

(30) Priority: **23.10.1991 GB 9122442**

(43) Date of publication of application:
**28.04.1993 Bulletin 1993/17**

(73) Proprietors:
- **SANDOZ LTD.**
  **4002 Basel (CH)**
  Designated Contracting States:
  **FR GB NL**
- **SANDOZ-PATENT-GMBH**
  **79539 Lörrach (DE)**
  Designated Contracting States:
  **DE**

(72) Inventor: **Kosters, Paulus Statius Reinier**
**NL-1611 JD Bovenkarspel (NL)**

(56) References cited:
**EP-A- 0 316 970**

- **JOURNAL OF PLANT DISEASES AND PROTECTION vol. 96, no. 6, 1989, STUTTGART pages 604 - 614 H.J.KRAUTHAUSEN 'Control of onion white rot (sclerotium cepirovum)'**
- **PLANT CELL PHYSIOL. vol. 27, no. 2, 1986, ROCKVILLE pages 367 - 371 R.A. FLETCHER 'Comparative fungitoxic and plant growth regulating properties of triazole derivatives'**
- **MED. FAC. LANDBOUWW. RIJKSUNIV. GHENT vol. 48, no. 3, 1983, pages 551 - 557 H.JENNRICH**
- **PROCEEDINGS 1981 BRITISH CROP PROTECTION CONFERENCE-PEST AND DISEASES 11TH, no. 2, 1981, pages 459 - 466 J.R.COLEY 'Possibilities for biological and integrated contrrol of white rot disease of allium'**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.13.16/3.4

## Description

The present invention relates to the use of triazole compounds and mixtures thereof in preventing, reducing or eliminating phytopathogenic fungus infestation of plants. In particular, the invention relates to the prevention, reduction or elimination of infection in plants attacked by organisms responsible for allium white rot.

## BACKGROUND

Members of the allium group include leeks, garlic, dry bulb onions, Japanese bunching onion and the like. Onion plants are known to be particularly prone to infestation by Sclerotium cepivorum (onion white rot). Once the fungus is present in the soil it is difficult to eradicate or control since the sclerotia from the fungus may persist in the soil for long periods, measured in years, during which time the soil is unsuitable for the planting of onion crops. Chemical control is not feasible and treatment with current methods utilising iprodione (125 g/kg seed) as a seed treatment or procymidon (4-6 kg/ha) as soil treatment are not effective, particularly with heavy infestation of the fungus. Furthermore, treatment of soil with known fungicide compounds may result in phytotoxic effects or may otherwise have undesirable effects on the environment.

There exists a need for a more effective and/or environmentally more friendly control of Sclerotium cepivorum in the field.

It has now been found that certain known triazoles can act as surprisingly effective control agents against Sclerotium cepivorum infestation of allium plants at application rates shoving good plant tolerance.

The term disease control resp. controlling as used herein is intended to relate to disease reduction, elimination or prevention. The term plant is intended to include plantlets, seedlings and seed.

## Detailed Description

According to the present invention there is provided a method of controlling Sclerotium cepivorum infestation in allium plants which comprises treating the seeds with a seed dressing formulation containing with a fungicidally effective amount of a compound of formula I,

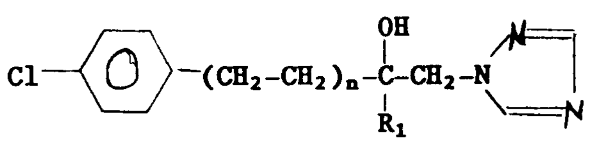

wherein n is 0 or 1,

and $R_1$ is saturated $C_{3-6}$hydrocarbyl.

Examples of saturated $C_{3-6}$hydrocarbyl groups according to the invention, include $C_{3-6}$alkyl, e.g. n-butyl or t-butyl, $C_{3-6}$cycloalkyl, e.g. cyclopropyl and $C_{3-6}$-(cycloalkyl-alkyl), e.g. 1-cyclopropylethyl.

The treatment according to the invention is conveniently effected with agriculturally acceptable composition forms of a compound of formula I. Preferably the compounds of formula I are applied to the seeds in the form of a seed dressing formulation. This has the concomitant advantage that the levels of fungicides which ultimately find their way into the soil are low, and do not significantly affect the environment.

Accordingly, the invention also provides a method of controlling Sclerotium cepivorum infestation in allium plants, preferably in onion seed comprising applying to allium seeds a coating containing a fungicidally effective amount of a triazole of formula I.

In another embodiment of the present invention, there is provided a coated seed of the allium group, preferably a coated onion seed comprising a fungicidally effective amount of a triazole of formula I in the coating.

The particular amount of triazole of formula I to be employed, will depend on various factors such as the particular active ingredient employed, the climatic conditions, and the like, however, in general satisfactory control may be obtained with seeds coated with from about 0.25 to about 12 g, preferably from about 0.5 to about 8.0 g, more preferably from 0.5 to 1.5 g of a triazole of formula I per kg of seed. The application rate is to be selected such that an optimum balance between disease control and plant tolerance is obtained. For cyproconazole the optimum amount broadly speaking lies within the range of from 0.25 to 4.0 g per kg allium seed, for tebuconazole the optimum amount lies within the range of from 1 to 6 g per kg allium seeds. (One kg onion seeds comprise approximately 250,000 seeds). The compounds of formula I have an excellent plant tolerance at the fungicidally effective rate.

Triazoles of formula I which may be used in the method of the present invention, include cyproconazole and tebuconazole. The triazole of formula I may be used as the sole active component, or, it may be mixed with other active triazole components according to formula I, or any other useful fungicidal component. Such other fungicidal or active components may include non-triazole components such as iprodione, captan, metalaxyl, oxadixyl, benomyl, thiabendazole, thiram, carbendazim or mixtures thereof. An example of such a mixture is a thiram: carbendazim mix used in a weight ratio of from about 1:1 to about 4:1. Other fungicides having a broad spectrum of fungicidal activity and/or are suitable for preventing or combatting seed or soil-borne diseases may also be used. The weight ratio of a triazole of formula I, especially in the case of tebuconazole or cyproconazole or a mixture thereof, to other fungicides, is not critical for the control of Sclerotium cepivorum. Effective and broad fungal control is for example, obtained by employing from 0.25 to 12 g of a compound of formula I in conjunction with from 1 to 8 g of an aggregate amount of from about 1:1 to about 4:1, of a thiram : carbendazim mixture per kg onion seed. As an example, good disease control is obtained by employing 0.5 to 2 g of cyproconazole in conjunction with 3 g of an aggregate amount of a 2:1 thiram : carbendazim mixture per kg of onion seed.

In a further embodiment of the present invention, there are provided fungicidal compositions comprising a triazole of formula I or mixtures thereof in association with an agriculturally acceptable diluent for use against Sclerotium cepivorum infection in allium plants and especially for use on onion plants.

The term "diluent" as used herein includes any liquid or solid agriculturally acceptable material - including carriers - which may be added to the fungicidal constituents to augment their applicability and efficacy. Thus ease of application and a desirable activity may be achieved through the employment of such diluents.

The diluent may be chosen from such components as talcs, kaolin, diatomaceous earth, xylene, water and the like. When applying formulations in spray form, such as water dispersible concentrates or wet table powders, such forms may additionally include surfactants such as wetting dispersing agents.

The fungicidal compositions suitable for use according to the method of the invention may be in conventional formulation form, and obtained in conventional manner. Preferred compositions for use according to the invention are in seed dressing composition form.

The seed dressing compositions suitable for use in the method of the present invention typically include from about 5 % to about 50 % by weight of fungicide (triazole alone or in admixture with other triazoles or other active components) in association with from about 95 % to 50 % by weight of agriculturally acceptable diluent and preferably, adjuvants as commonly employed in the art.

Examples of agriculturally acceptable diluents and adjuvants suitable or use in such seed dressing formulations, include active carbon, kaolin clays polyvinylacetate and copolymers thereof, pigments and water.

A seed dressing formulation, e.g. as described above, may be applied in a manner known per se to seeds employing a compound of formula I and an agriculturally acceptable carrier in suitable seed dressing form such as an aqueous suspension or a dry powder form having good adherence to seed. Thus, the components of the seed dressing formulation may be applied to seed in a single application or layer, or may be applied in two or more layers depending on design. For example, an initial layer may comprise the addition of agriculturally acceptable diluents and/or adjuvants followed by the addition of a second layer comprising a compound of formula I and appropriate agriculturally acceptable diluents and adjuvants as hereinbefore described.

There now follow examples which illustrate the present invention. It is to be understood that the examples are not to be construed as limiting the scope of the claims in any way.

**EXAMPLE 1: Seed dressing Formulation**

| | |
|---|---|
| 25 parts | of cyproconazole |
| 15 parts | of dialkylphenoxypoly(ethylenoxy)ethanol |
| 15 parts | of fine silica |
| 44 parts | of fine kaolin |
| 0.5 parts | of pigment and |
| 0.5 parts | of Xanthan Gum |
| 100 parts | |

are mixed and ground in a contraplex mill at approx. 10,000 rpm to an average particle size of below 20 microns. The resulting formulation is applied to the seeds as an aqueous suspension in an apparatus suitable for that purpose.

**EXAMPLE 2: Seed dressing Formulation**

| | |
|---|---|
| 45 parts | of cyproconazole or tebuconazole are mixed with |
| 1.5 parts | of diamyl phenoldecaglycolether ethylene oxide adduct |
| 2 parts | of spindle oil |
| 51 parts | of fine talcum and |

| | |
|---|---|
| 0.5 parts | of colorant (Luconyl$^R$- BASF) |
| 100 parts | |

The mixture is ground in a contraplex mill at 10,000 rpm until an average particle size of less than 20 microns is obtained. the resulting dry powder has good adherence and may be applied to seeds, e.g. by mixing for 2 to 5 minutes in a slowly turning vessel.

**EXAMPLE 3: Seed dressing formulation**

| | |
|---|---|
| 4 g | Aatopam-N (comprising 25 % by weight carbendazim and 50 % by weight thiram) |
| 4 g | of a conventional wettable powder formulation comprising 25 % by weight of tebuconazol |
| 4 g | of vinylacetate-ethylene copolymer |
| 10 g | of active carbon |
| 10 g | of kaolin clay |
| 10 g | of blue pigment (Luconyl$^R$ - BASF) |
| 8 g | of white pigment (titanium dioxide) |
| 300 g | of water. |

The resulting formulation is applied to the seeds as an aqueous suspension in an apparatus suitable for that purpose.

**EXAMPLE 4**

Fungicidal activity

4.1. Onion seeds (variety Jumbo) are treated with a mixture of

| | |
|---|---|
| 4 g | Aatopam$^R$-N (comprising 25 % by weight carbendazim and 50 % thiram) |
| 8 g | methyl cellulose |
| 20 g | kaolin clay |
| 10 g | pigment |
| and 250 g | water |

(hereinafter Formul. 4)
or with mixtures of said Formul. 4 with

| | |
|---|---|
| 1 g | (Formul. 5) |
| 3 g | (Formul. 6) or |
| 5 g | (Formul. 7) |

of a 25 % by weight wettable powder formulation of cyproconazole.

The treatments and obtained seeds are summarised in Table 1.

Table 1

| Treatment Example seed | Treatment | g active ingredient per kg |
|---|---|---|
| Control | Formul. 4 | 2 g thiram + 1 g carbendazim |
| 1 | Formul. 5 | 2 g thiram + 1 g carbendazim + 0.25 g cyproconazole |
| 2 | Formul. 6 | 2 g thiram + 1 g carbenzadim + 0.75 g cyproconazole |
| 3 | Formul. 7 | 2 g thiram + 1 g carbendazim + 1.25 g cyproconazole |

Treated seeds are tested for germination and sown in the soil naturally infested with Sclerotium cepivorum in 8 replications. A count of diseased plants is made at weekly intervals and infested plants eliminated. The results are given in Table 2 as number of newly diseased plants on each count and total number of diseased plants

counted throughout the trial. Subsequent to each count the diseased plants are eliminated.

TABLE 2

| a) - plants newly infested with white rot at each count as a percentage of the total number of plants counted in the trial. | | | | | | |
|---|---|---|---|---|---|---|
| Treatment Example | % infested plants at weekly intervals from sowing | | | | | |
| | week 1 | week 2 | week 3 | week 4 | week 6 | week 7 |
| Control | 3 | 11 | 9 | 17 | 6 | 18 |
| 1 | 0 | 4 | 5 | 9 | 6 | 16 |
| 2 | 1 | 1 | 3 | 1 | 3 | 7 |
| 3 | 0 | 0 | 0 | 0 | 0 | 3 |
| b) - Cumulative total of infested white rot plants at each count as a percentage of the total number of plants counted in the trial. | | | | | | |
| Treatment Example | % infested plants at weekly intervals from sowing | | | | | |
| | week 1 | week 2 | week 3 | week 4 | week 6 | week 7 |
| Control | 3 | 14 | 23 | 40 | 46 | 64 |
| 1 | 0 | 4 | 9 | 18 | 23 | 39 |
| 2 | 1 | 2 | 5 | 7 | 10 | 16 |
| 3 | 0 | 0 | 0 | 1 | 1 | 4 |

4.2 Seeds coated according to Treatment Example 3 (see Example 4) are stored for 6 months. A germination trial performed at the end of the storage period shows germination of treated seeds to be unchanged from that of untreated seeds.

**EXAMPLE 5: Granule Formulation**

A granular carrier is uniformly impregnated in a ribbon blender with a 40 % fungicide/solvent mixture wherein the fungicide is cyproconazole or tebuconazole. It is allowed to dry and drying may conveniently be assisted by mixing or warming at a low temperature (e.g. 50°C).

The granule formulation results having the following composition:

| | |
|---|---|
| fungicide/solvent | 2.5 parts |
| granular carrier | 97.5 parts |
| | 100.0 parts |

in which the concentration of the fungicide is about 1 %. Suitable carriers may be attapulgit or other standard carriers. The thus obtained granules can be employed for soil treatment.

**Claims**

1. A method of controlling Sclerotium cepivorum infestation in allium plants which comprises applying to allium seeds a seed dressing formulation containing a fungicidally effective amount of a compound of formula I

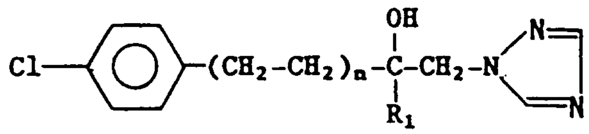

wherein n is 0 or 1, and $R_1$ is saturated $C_{3-6}$hydrocarbyl.

2. A method according to Claim 1 comprising applying from 0.25 to 12 g of a compound of formula I per kg of seed.

3. A method according to Claim 2 comprising applying from 0.5 to 8 g of a compound of formula I per kg seed.

4. A method according to Claim 3, comprising applying from 0.5 to 1.5 g of a compound of formula I per kg seed.

5. A method according to Claims 1 to 4, wherein the allium seeds are onion seeds.

6. A method according to any one of Claims 1 to 5, wherein the compound of formula I is cyproconazole.

7. A method according to any one of Claims 1 to 5, wherein the compound of formula I is tebuconazole.

8. A seed dressing formulation for use in a method according to any one of Claims 1 to 7 comprising a fungicidally effective amount of a compound of formula I in association with one or more agriculturally acceptable diluents.

9. A seed dressing formulation according to Claim 8 comprising a compound of formula I in association with iprodione, captan, metalaxyl, oxadixyl, benomyl, thiabendazole, thiram, carbendazim or mixtures thereof.

10. A formulation according to Claim 9 comprising thiram : carbendazim in a weight ratio range of from 1:1 to 4:1.

11. A formulation according to Claim 10 comprising from 0.25 to 12 weight units of a compound of formula I in admixture with 1 to 8 weight units of an aggregate amount of a 1:1 to 4:1 thiram : carbendazim mixture.

12. Coated allium seeds, wherein the seed coating contains a fungicidally effective amount of a compound of formula I as defined in Claim 1.

13. The use of a compound of formula I as defined in Claim 1 in a seed dressing formulation for controlling Sclerotium cepivorum infection of allium plants.

**Patentansprüche**

1. Verfahren zur Kontrolle von Befall mit *Sclerotium cepivorum* bei Allium-Pflanzen, welches das Applizieren einer Saatgutbeschichtungsformulierung auf Allium-Saatgut umfasst, welche eine fungizid wirksame Menge einer Verbindung der Formel I enthält,

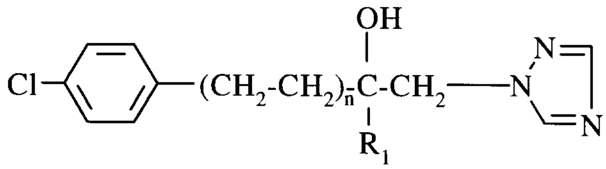

worin n 0 oder 1, und $R_1$ eine gesättigtes $C_{3-6}$-Hydrocarbyl ist.

2. Verfahren gemäss Anspruch 1, welches das Applizieren von 0,25 bis 12 g einer Verbindung der Formel I pro kg Saatgut umfasst.

3. Verfahren gemäss Anspruch 2, welches das Applizieren von 0,5 bis 8 g einer Verbindung der Formel I pro kg Saatgut umfasst.

4. Verfahren gemäss Anspruch 3, welches das Applizieren von 0,5 bis 1,5 g einer Verbindung der Formel I pro kg Saatgut umfasst.

5. Verfahren gemäss einem der Ansprüche 1 bis 4, worin das Allium-Saatgut Zwiebelsaatgut ist.

6. Verfahren gemäss einem der Ansprüche 1 bis 5, worin die Verbindung der Formel I Cyproconazol ist.

7. Verfahren gemäss einem der Ansprüche 1 bis 5, worin die Verbindung der Formel I Tebuconazol ist.

8. Saatgutbeschichtungsformulierung zur Verwendung in einem Verfahren gemäss einem der Ansprüche 1 bis 7, welche eine fungizid wirksame Menge einer Verbindung der Formel I zusammen mit einem oder mehreren in der Landwirtschaft annehmbaren Verdünnungsmitteln enthält.

9. Saatgutbeschichtungsformulierung gemäss Anspruch 8, welche eine Verbindung der Formel I zusammen mit Iprodion, Captan, Metalaxyl, Oxadixyl, Benomyl, Thiabendazol, Thiram, Carbendazim oder Mischungen davon enthält.

10. Formulierung gemäss Anspruch 9, welche Thiram : Carbendazim in einem Gewichtsverhältnis im Bereich von 1:1 bis 4:1 enthält.

11. Eine Formulierung gemäss Anspruch 10, welche von 0,25 bis 12 Gewichtseinheiten einer Verbindung der Formel I zusammen mit 1 bis 8 Gewichtseinheiten einer zusammengefügten Menge von einer 1:1 bis 4:1-Thiram : Carbendazim-Mischung enthält.

12. Beschichtetes Allium-Saatgut, worin die Saatbeschichtung, eine fungizid wirksame Menge einer Verbindung der Formel I, wie in Anspruch 1 definiert, enthält.

13. Verwendung einer Verbindung der Formel I, wie in Anspruch 1 definiert, in einer Saatgutbeschichtungsformulierung zur Kontrolle von Befall mit *Sclerotium cepivorum* bei Allium-Pflanzen.

## Revendications

1. Une méthode pour lutter contre l'infestation de Sclerotium cepivorum dans les plantes alliacées qui comprend l'application aux semences d'alliacées d'une formulation d'enrobage des semences contenant une quantité efficace du point de vue fongicide d'un composé de formule I

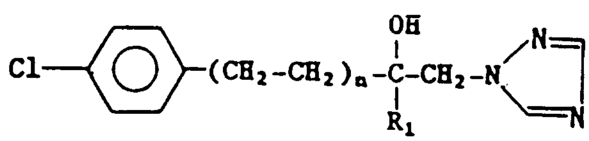

dans laquelle n signifie 0 ou 1,
et $R_1$ signifie un groupe $C_{3\text{-}6}$-hydrocarboné saturé.

2. Une méthode selon la revendication 1, comprenant l'application de 0,25 à 12 g d'un composé de formule I par kg de semence.

3. Une méthode selon la revendication 2, comprenant l'application de 0,5 à 8 g d'un composé de formule I par kg de semence.

4. Une méthode selon la revendication 3, comprenant l'application de 0,5 à 1,5 g d'un composé de formule I par kg

de semence.

5. Une méthode selon les revendications 1 à 4, dans laquelle les semences d'alliacées sont des semences d'oignons.

6. Une méthode selon l'une quelconque des revendications 1 à 5, dans laquelle le composé de formule I est le cyproconazole.

7. Une méthode selon l'une quelconque des revendications 1 à 5, dans laquelle le composé de formule I est le tebuconazole.

8. Une formulation d'enrobage des semences pour une utilisation dans une méthode selon l'une quelconque des revendications 1 à 7, comprenant une quantité efficace du point de vue fongicide d'un composé de formule I en association avec un ou plusieurs diluants acceptables en agriculture.

9. Une formulation d'enrobage des semences selon la revendication 8, comprenant un composé de formule I en association avec l'iprodione, le captane, le métalaxyl, l'oxadixyl, le bénomyl, le thiabendazole, le thirame, la carbendazime ou leurs mélanges.

10. Une formulation selon la revendication 9, comprenant un mélange thirame/carbendazime dans un rapport pondéral compris entre 1:1 et 4:1.

11. Une formulation selon la revendication 10, comprenant de 0,25 à 12 unités pondérales d'un composé de formule I et de 1 à 8 unités pondérales d'une quantité globale d'un mélange thirame/carbendazime d'un rapport compris entre 1:1 et 4:1.

12. Des semences d'alliacées enrobées où l'enrobage des semences contient une quantité efficace du point de vue fongicide d'un composé de formule I tel que défini à la revendication 1.

13. L'utilisation d'un composé de formule I tel que défini à la revendication 1, dans une formulation d'enrobage des semences pour lutter contre l'infestation de Sclerotium cepivorum dans les plantes alliacées.